Europäisches Patentamt

European Patent Office

Office européen des brevets

(11) Publication number:

**0 315 023**
**A2**

## (12) EUROPEAN PATENT APPLICATION

(21) Application number: 88117711.7

(51) Int. Cl.⁴: **H02G 3/04**

(22) Date of filing: 25.10.88

(30) Priority: 03.11.87 GB 8725677

(43) Date of publication of application:
10.05.89 Bulletin 89/19

(84) Designated Contracting States:
AT BE CH DE ES FR GB GR IT LI LU NL SE

(71) Applicant: SWIFTS OF SCARBOROUGH
LIMITED
Cayton Low Road
Eastfield Scarborough YO11 3BY(GB)

(72) Inventor: Gregory, Edwin Stuart
6 Barley Croft
Scarborough(GB)

(74) Representative: Denmark, James
c/o Bailey, Walsh & Co. 5 York Place
Leeds LS1 2SD Yorkshire(GB)

(54) Improvements relating to cable tray systems.

(57) This invention provides an accessory for a cable tray system which is for connecting adjacent ends of two or more cable trays. The accessory has a base plate and side walls and may be a riser, reducer, T-connector, cross connector, corner connector or the like and it is provided with integral connecting pieces whereby separate fish plates or other couplings for connecting the cable trays and accessory are not required. The connecting piece preferably comprises tongues on the ends of said side walls, the tongues having elongated slots for the receipt of at least two bolts which pass through respective apertures on the side walls of the cable trays when the tongues are in overlapping relationship with the cable tray side walls, and specifically to lie between the inner and outer wall section of the walls of return type cable trays.

## Improvements Relating to Cable Tray Systems

This invention relates to cable tray systems, comprising cable trays which are for holding electrical cables and/or service pipes or the like when installed in buildings, and/or underground, and accessories which serve to connect cable tray ends where a change in direction and/or width is required.

Cable trays comprise essentially elongated shallow channel members and the accessories are also of channel cross section and comprise for example T pieces, reducers, bends, risers and cross pieces, and as their names suggest, provide for connection between channel members which lie at right angles, which are of differing width, and where the cables or pipes must travel between higher and lower levels.

The cable trays and accessories are provided with apertures therein to enable the strapping of the cables and pipes thereto by passing clamps and/or ties or straps through the apertures and round the cables and piles.

In installing a cable tray system, depending upon the layout of the cables and/or service pipes, many different types of accessories may have to be used, and the method of connecting the accessories to the cable trays heretofore has employed the provision of various types of separate components which are bolted to the accessory and cable tray end for establishing the connection.

Regardless of whatever method is used, the known methods create considerable inconvenience in installing the system, because frequently the cable trays are installed at a considerable height above ground level and in inaccessible locations, such as in ceiling and roof voids and the workmen installing the cables have to work on ladders and scaffolding. Making the connections between the cable trays and the accessories is therefore difficult because of the fact that the workmen have to carry handle and position the separate components often while balancing on ladders or scaffolding. The workmen also have to position and tighten the bolts.

The result of this difficulty is that frequently workmen who are either lazy or frustrated may well complete the joints only in an ineffective manner, for example by using less bolts than recommended or failing to use all of the said components.

The present invention aims at overcoming this inconvenience, and in accordance with the present invention, for a cable tray system, an accessory therefore is provided with an integral connecting pieces means.

Alternatively or additionally, the integral connecting means comprise extension plates integral with and projecting from the base of the accessory, so that the extension plates will lie to the underside of adjacent ends of cable trays to be connected to the necessary said extension plates being provided with apertures to enable them to be bolted to the cable trays.

Preferably, the integral connecting means may comprise extension tongues bars on the side walls of the accessory, which tongues serve to overlap the walls of adjacent ends of the cable tray to be connected thereto, so that securement of the accessories and cable tray ends can take place by bolting together the extension tongues and cable tray walls where they overlap, suitable apertures being provided in these tongues and walls for this purpose.

Preferably, the accessory comprises a blank of sheet metal folded to define the side walls, said tongues being preferably connected to the ends of said wall by reduced width necks enabling the tongues readily to be bent relative to the walls to align the tongues with the cable trays to be connected thereto.

Preferably also, the tongues have slots for receiving the coupling bolts, said slots extending in the direction of the lengths of the tongues.

The cable trays may comprise simply sheet metal strip with the edges turned up to define the side walls, so that the strip edges face upwards, in which case the cable trays are referred to as non-return flange, or the strip edges may be double folded so that the edges are folded upwardly and then downwardly so that the strip edges face downwardly, in which case the cable trays are referred to as return flange type.

In a modified arrangement of the present invention, when risers are to be used with return flange type cable trays, the riser which is of known return flange type of which the base is curved but the side walls lie in flat planes, the end of the riser member is adapted to fit into the end of an elongated return flange type cable tray so that the riser walls lie between the two wall portions at the respective sides of the cable tray, whereby connection between the riser and cable tray can be effected by bolting through the overlapping wall portions and the riser walls.

In an alternative arrangement, the riser has two reinforcing strips on the inner sides respectively of the side walls, such reinforcing strips being welded to the side walls, and having ends which extend beyond the ends of the side walls to form said integral connecting tongues, which engage between the two wall portions at the respective sides of a return flange type cable tray.

The sheet material from which the cable trays and accessories are produced will preferably be metallic in nature, but this is not an essential feature of the invention, and any material which provides the physical characteristics equivalent to the sheet metal commonly used, may be used.

According to another embodiment of the invention an accessory is produced from sheet material and the side walls are made up of individual extension plates folded upwardly relative to the accessory base, and a strips secured to the extension plates.

Embodiments of the invention will now be described, by way of example, with reference to the accompanying drawings, wherein:-

Fig. 1 is a perspective view of a 90° bend cable tray connector of the non-return flange type;

Figs. 2, 3 and 4 are respective perspective views of a non-return flange type cable tray accessory, for connecting three elongated cable trays lying at right angles to each other, a reducer accessory for connecting cable trays of different widths, and a cross piece accessory for connecting four cable trays lying at right angles to each other;

Fig. 5 is a plan view of a sheet metal blank erectable into the accessory shown in Fig. 1;

Figs. 6 to 9 are perspective view 5 similar to Figs. 1 to 4, but showing return flange type cable tray connectors;

Figs 10 and 1 1 are plan views similar to Fig. 5 but showing blanks erectable into the accessories shown in

Figs. 7 and 8;

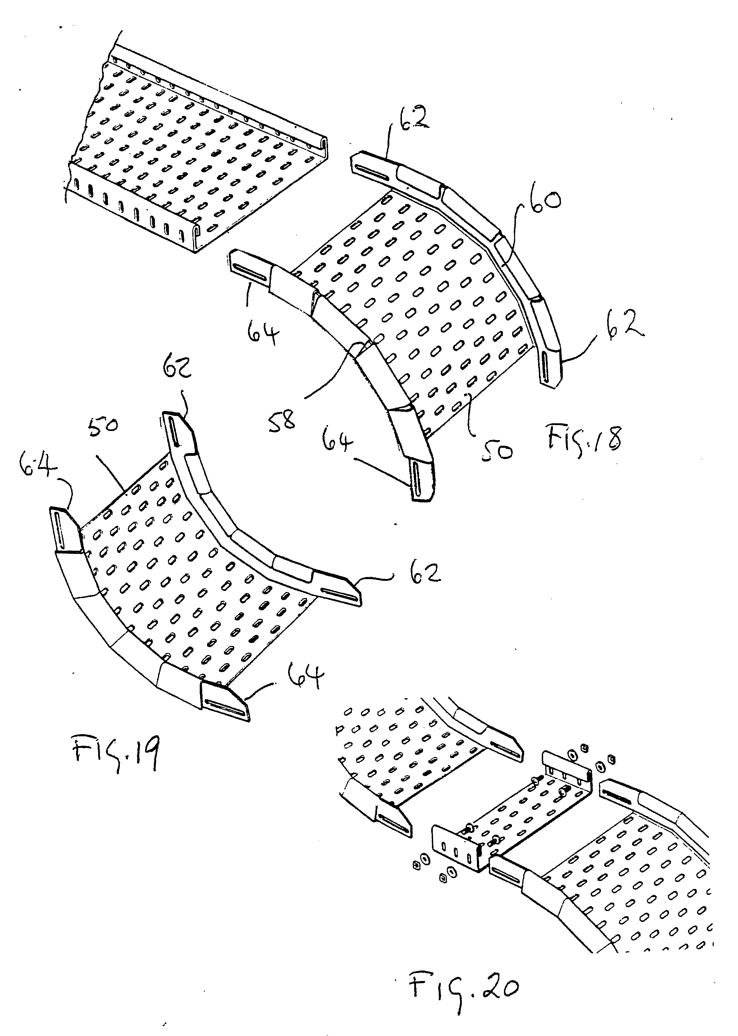

Fig. 12 shows how the accessory according to Fig. 6 is coupled to a cable tray end;

Fig. 13 shows how two accessories as shown in Fig. 6 may be connected together to form an S-bend accessory assembly;

Figs. 14 and 15 are perspective views of conventional outer and inner risers;

Figs. 16 and 17 are perspective views of inner and outer risers according to another aspect of the invention;

Figs. 18 and 19 are perspective views of outer and inner risers according to another embodiment of the invention; and

Fig. 20 illustrates how two risers respectively as shown in Figs. 18 and 19 can be coupled end to end to form an inner/outer accessory assembly; and

Figs 21 to 24 are side views of respective risers for coupling cable trays at 90°, 77,5°, 45° and 22.5°.

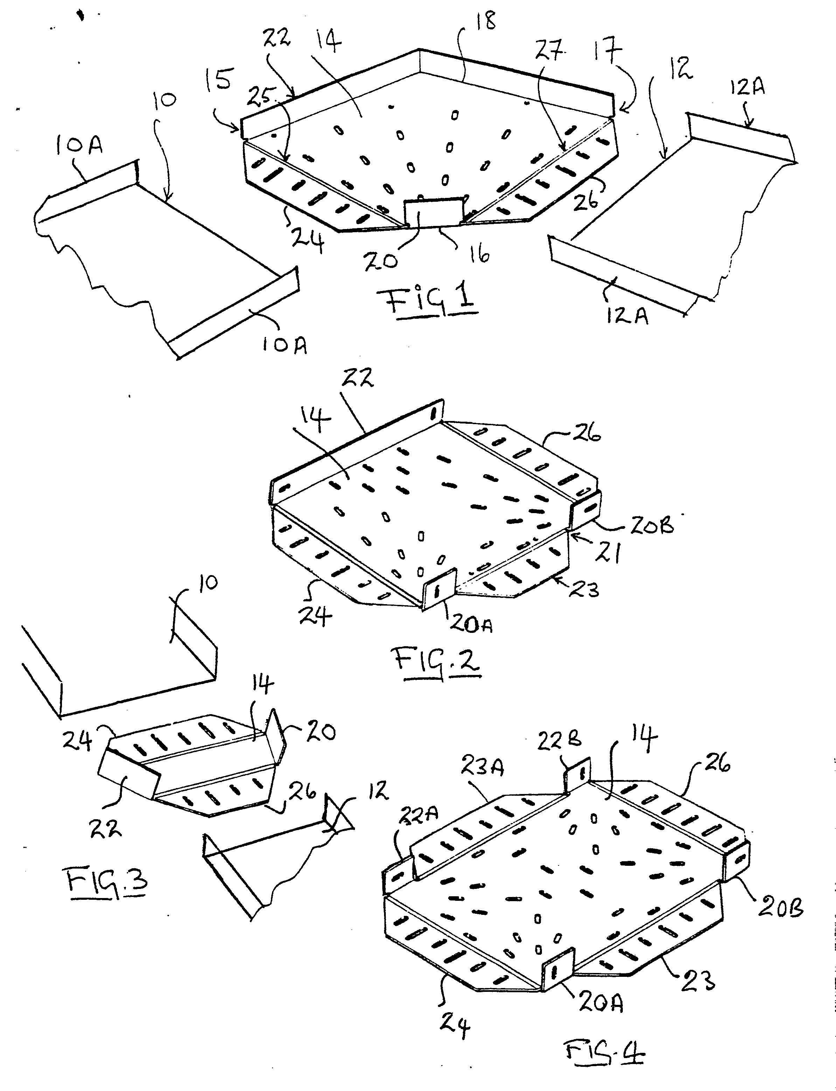

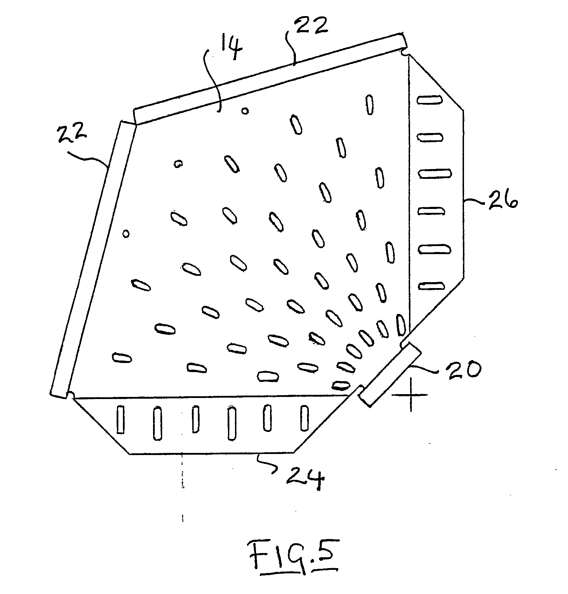

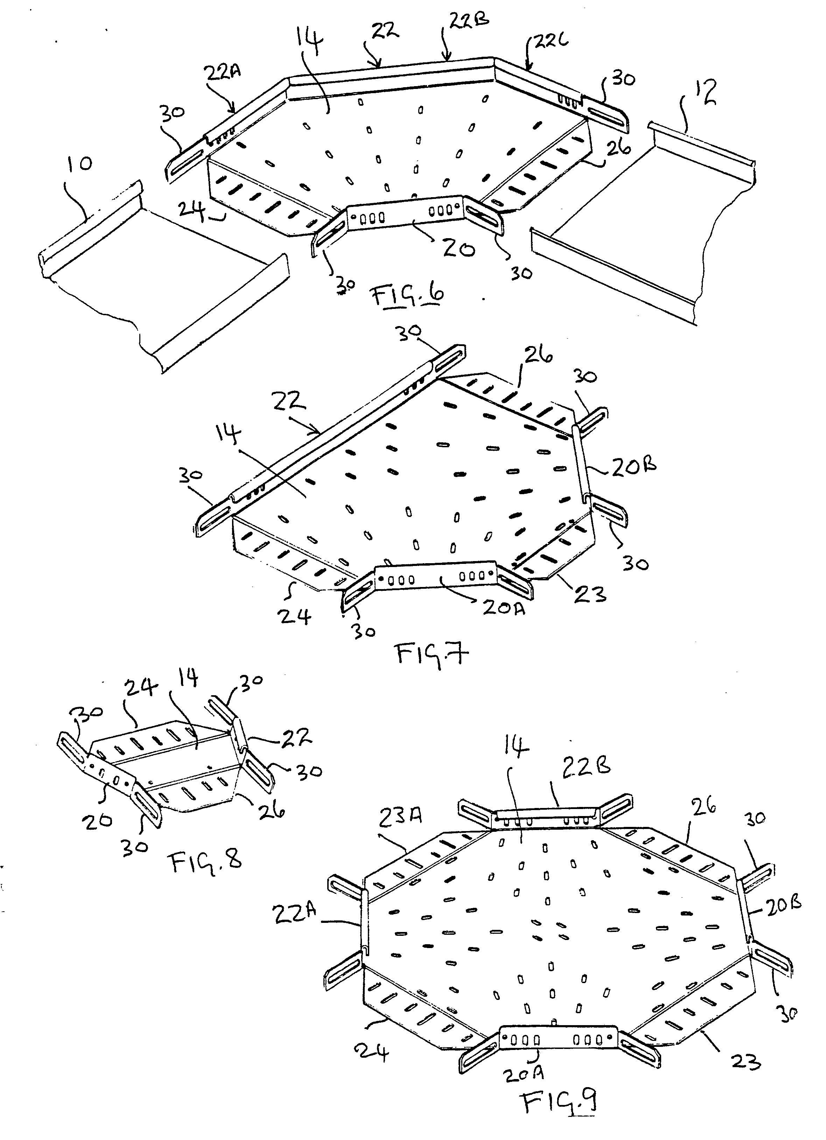

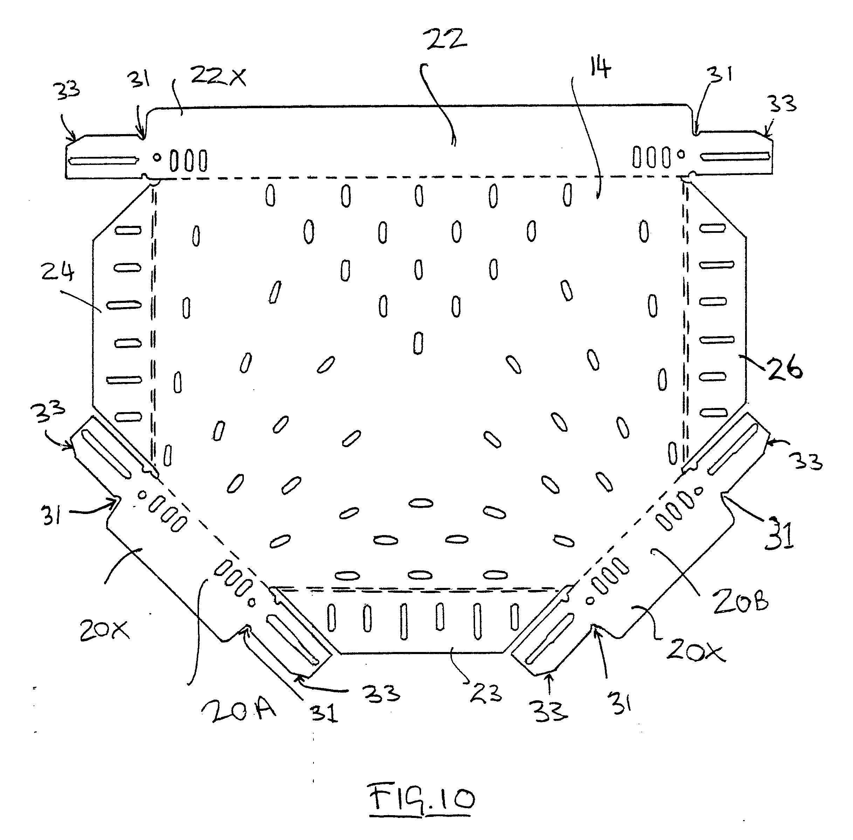

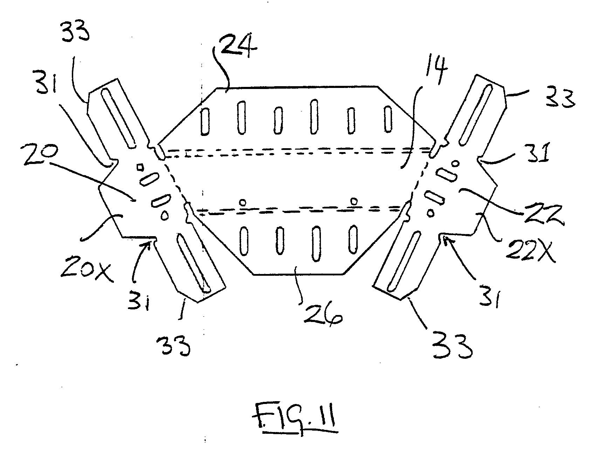

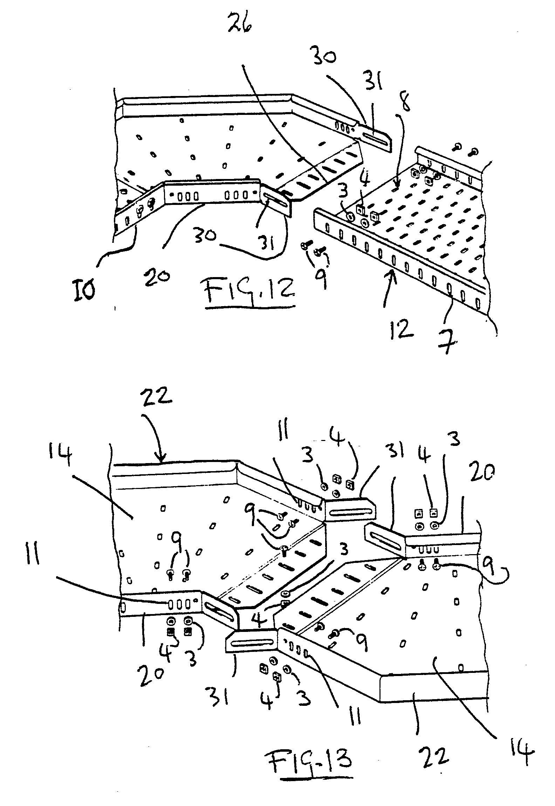

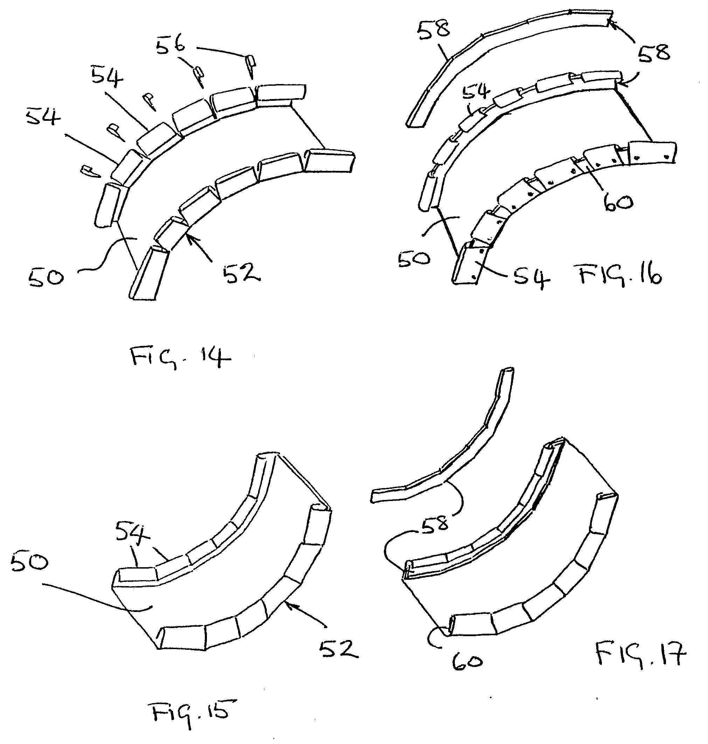

Referring to the drawings, the cable tray accessories shown in Figs. 1, 2, 3 and 4 are for connecting elongated cable trays of the non-return flange type and of the return flange type in the cases of Figs. 6 to 9.

Each of these cable trays is provided with a base and side walls, and in the case of the non-return flange type cable trays, the side walls are single walls, whilst in the case of the return flange type, the walls are double walls. The bases of the trays are provided with apertures normally in the form of rows of slots, the slots lying transverse to the length direction of the tray, but the rows extending lengthwise of such tray, and being staggered in alternate rows so as to provide over the entire face of the base a pattern of coupling apertures through which ties and clamps can be passed in order to anchor cables or pipes in the cable trays to said bases. A cable tray with said apertures is shown in Fig. 12 but in the case of Figs.l to 4 and 6 to 9, where cable trays are shown, the apertures are omitted in the interests of clarity.

Each of the accessories shown in the drawings is also provided with a pattern of coupling apertures on the base thereof, and in some cases the walls and/or tongues integral therewith will also be provided with coupling apertures.

In the case of the accessory shown in Fig. 1, this accessory is for coupling the ends of cable trays 10, 12 which lie at 90° to each other, and the accessory is formed from sheet metal and comprises a base 14 having an inner edge 16 and an outer edge 18. The widths of the ends 15, 17 of the accessory correspond to the width of the cable trays 10, 12 to be coupled thereby. At the inner edge 16 is an inner wall 20 whilst at the outer edge 18 is an outer wall 22, the said inner and outer walls 20, 22 being disposed upright and at right angles to the plane of the base 14.

The ends of the walls 20 respectively terminate in alignment, and beyond the planes containing the ends of the walls are integral extension sections or fish plates 24, 26 at the respective ends of the base plate 14. The fish plates as shown at 25, 27 are offset or downwardly displaced joggled relative to the plane of the base plate 14 and again are provided with coupling apertures. The displacement or joggling of the fish plates means that the ends of the cable trays to be connected by the accessory can rest on the fish plates 24, 26 and their upper base surfaces will be in the same plane as the upper surface of the base plate 14 of the accessory ensuring that the cables and pipes will be supported on a surface without steps.

To couple the accessory to the cable trays 10, 12 it is simply a matter of arranging the said cable trays in an overlapping arrangement with the respective fish plates 24, 26 and passing bolts through apertures in the fish plates 24, 26 which are aligned with apertures in the cable trays 10, 12. The cable trays 10, 12 also have walls 10A, 12A which form continuations of the walls 20, 22 of the accessory.

Fig. 2 shows a non-return flange type accessory for forming a T junction between elongated three cable trays (not shown) of which two lie in alignment and the other lies at right anlges thereto. A base plate 14 of rectangular configuration is provided with an outer wall 22 along one longer side of the plate, and at the opposite side is provided with two wall sections 20A, 20B defining a gap 21 therebetween. At the gap, the base plate has an integral fish plate 23 coupled thereto, the fish plate 23 being joggled in relation to the base plate as described above, and at the narrower ends of the base plate 14 are further integral fish plates 24, 26 also joggled as described above. The utilisation of the accessory shown in Fig. 2 will be understood insofar as cable trays which are to be in alignment can be coupled to the fish plates 24, 26 at the ends of the base plate 14, whilst a third cable tray can be coupled to the fish plate 23 at the side 22 of the base plate 14.

In the arrangement shown in Fig. 3, the accessory comprises a narrow trapezium shaped base plate 14, at the narrow ends of which are side wall sections 20, 22. At the longer edges the plate 14 has integral, joggled, fish plates 24, 26 which serve the same purpose as the fish plates 24, 26 in Fig. 1, in that they serve to connect the ends of cable trays 10, 12 to the accessory. By shaping the plate 1 4 in the form of a narrow trapezium, so the accessory, as shown, becomes suitable for connecting cable trays 10, 12 of different widths.

Fig. 4 shows a cross piece accessory for connecting first orthogonally arranged cable tray ends (not shown). The accessory is of similar construction to the accessory of Fig. 2 and similar reference numerals are again used to designate similar parts. The differences between the Fig. 2 accessory and that shown in Fig. 4, are that in the Fig. 4 accessory, the side 22 is in two spaced sections 22A, 22B, similar to sections 20A, 20B, a further integral, joggled fish plate 23A is provided symmetrically arranged relative to fish plate 23, and the pattern of holes in the base 14 is different.

Fig. 5 shows a sheet metal blank which, as will be readily appreciated, can be folded appropriately to provide the accessory of Fig. 1. This figure shows clearly the pattern of holes in the base 14, and it will be noticed that the holes are spaced slots arranged in radii extending from the corner of base 14 at which the wall 20 is located. This pattern of slots is present in the base of each of the accessories in Figs. 1, 2 and 4.

The arrangements shown in Figs. 6 to 9 are similar to the arrangements shown in Figs. 1 to 4, except that they are for coupling return type cable trays 10, 12, and the accessories are also of the return flange type in that each of the upstanding walls 20, 22 is a double wall and has an outer wall portion extending upwardly from the base plate, and an inner wall portion extending downwardly from the top edge of the outer wall portion towards the base plate. These return flange type accessories and cable trays are utilised when heavier gauge cables and pipes are to be supported by the cable trays and accessories and thus it will be seen in Fig. 6 that the outer wall 22 is made up of three sections 22A, 22B and 22C.

In the arrangement of Fig. 6, which comprises an accessory for coupling cable trays lying at right angles to each other, the inner wall 20 is a straight wall, whilst the outer wall is made up of three sections 22A, 22B and 22C lying at the angles to each other as shown. The walls are formed by folding same upwardly and inwardly relative to the base plate 14, and in fact the accessory is formed from a single sheet metal blank (suitably a stamping). Although the various sections of the outer wall can be welded together, this is not necessary.

At the ends of the base plate 14 are provided integral fish plates 24, 26 similar to the arrangement shown in Fig. 1 and the fish plates 24, 26 are again joggled relative to the base plate 14 for the purpose as described herein.

In addition, the ends of the inner and outer walls 20, 22 are provided with tongues 30 which are located so that these tongues will lie inside the walls of the cable trays which are connected thereto, and the tongues are provided with coupling slots of a length related to the apertures in the walls of the cable trays as described in our copending British Patent Application No.      , so that fixing bolts may be passed through the tongues and through apertures the outer wall sections of the cable trays 10, 12 to be connected by the accessory regardless of the length to which the cable tray may have been put. As an alternative or in addition the tongues may be welded to the cable trays.

These tongues may be provided in the accessories as shown in Figs. 1 to 4 if desired.

The accessory shown in Fig. 7 is for coupling cable trays (not shown) lying at right angles to each other and defining a T junction, and again the main difference between the Fig. 7 arrangement and the Fig. 2 arrangement is that the walls 20, 22 are of the return type, and the outer wall portions 20, 22 are provided with connecting tongues 30 in a similar fashion to those described in relation to Fig. 6.

In the arrangement of Fig. 8, the accessory in fact forms a reducer between a large size cable tray and a smaller size cable tray similar to Fig. 3, these cable trays being of the return type as indeed is the accessory. The accessory comprises a trapezoidal base plate 14 with side walls 20 and 22 of the return type, and the walls are provided with integral tongues 30 of the type herein described, and finally integral fish plate connectors 24 and 26 are at the ends of the connector as shown, these fish plates 26 being joggled relative to the plate 14, again as described herein.

The manner of connection of the cable trays to the accessory shown in Fig. 7 will be understood from the drawing and previous description in relation to other embodiments.

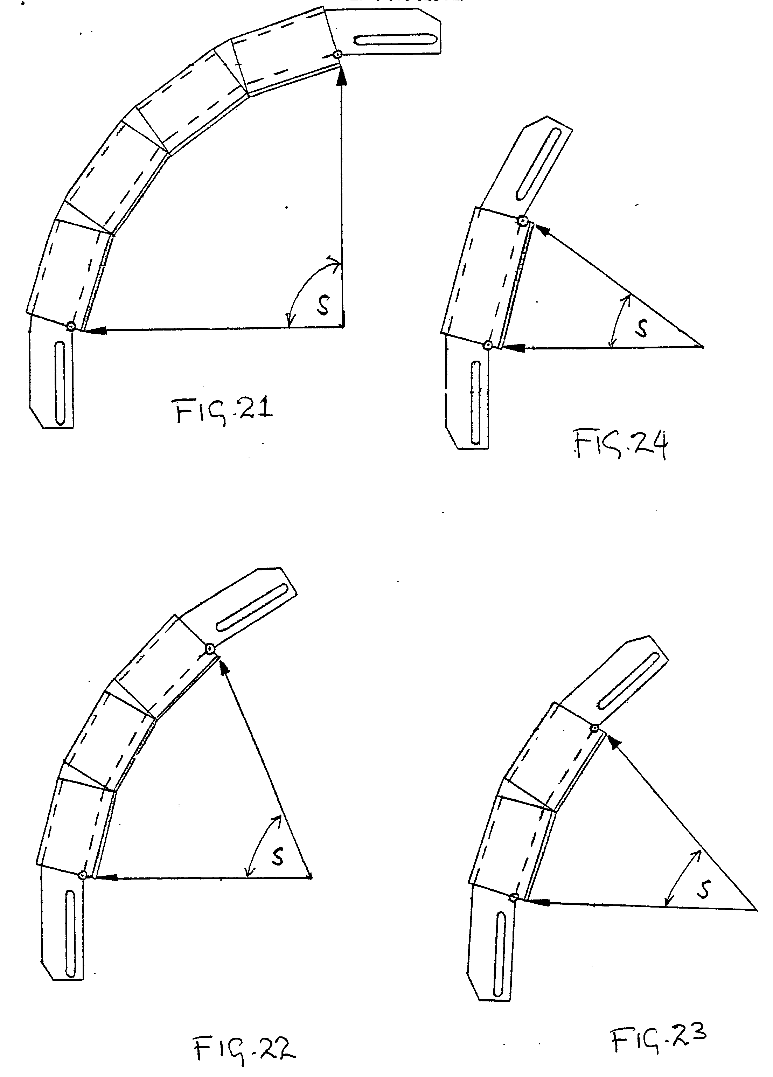

Fig. 9 shows an accessory for coupling the ends of four cable trays in similar fashion to Fig. 4 except that the accessory is of the return type. From previous description and use of the same reference numerals the construction, operation and erection of the blank will be well understood.

Figs. 10 and 11 are views similar to Fig. 5, but show the blanks which are for producing the accessories shown in Figs. 7 and 8. In each case the aperture pattern in the base 14 and/or fish plates 23, 24, 26 is clearly shown, and the double dotted lines indicate where the blank has to be joggled to deflect the fish plates 23, 24, 26 out of the plane of the blank. The single dotted lines indicate where the blank has to be folded so as to turn the walls 20, 22 upwardly to lie at right angles to the base 14. The extensions 20X, 22X of the walls 20, 22 are eventually folded inwardly to form return walls hence the designation of the accessories of Figs. 6 to 9 as return flange type.

The tongues 30 having the said slots 31 are coupled to the walls 20, 22 as shown by reduced width neck portions or regions 31 as the tongues have to be bent out of the planes of the walls 20, 22, as shown for example in Figs. 7 and 8 to lie in the planes of the walls of the cable trays to which they are to be connected. It is to be noted furthermore that the tongues 30 have chamfered upper corners 33 to enable the tongues easily to enter between the double walls of the cable trays.

Referring now to Figs. 12 and 13, in these figures arrangements are shown for the coupling together in the case of Fig. 12 of the accessory shown in Fig. 6 with the end of the cable tray 12 also shown in Fig. 6, but in addition the cable tray 12 is shown with the appropriate pattern of apertures, and also the fixing bolts, nuts and washers are illustrated in exploded perspective elevation.

The cable tray 12 it will be observed is provided along its outer side wall with spaced elongated apertures 7 and the rows of apertures in the base, as already described, are illustrated by reference numeral 8. The apertures 7 are pitched by a certain amount related to the length of the slots 31 in the tongues 30 so that, regardless of the length to which the cable tray 12 is cut, and it is quite frequently required that the cable tray must be cut in order to fit into a particular space, the slots 31 will still span to adjacent apertures 7 enabling the passage through the tongues 30 and the walls of the cable tray of pairs of bolts 9 which are fixed by associated nuts and washers 3 and 4. The tongues 30 are engaged, between the inner and outer wall sections of each cable tray wall whilst the fish plate 26 is located to the underside of the cable tray end, and fixing through the fish plate and cable tray base often can be effected by means of nuts and bolts.

To the left hand side of the illustration of Fig. 12, the cable tray 10 is shown in the connected position. It will be appreciated that the tongues 31 integral with the wall 20, have to be bent in the region of narrow necks 31 out of the plane of the wall 20 so as to lie in alignment with the appropriate wall of the cable tray 12.

In the arrangement shown in Fig. 13, two of the accessories each as shown in Fig. 6 are connected end to end so as to form an S-shaped cavity for the receipt of the pipes and cables to be held by the cable tray system. Similar reference numerals have been used to designate similar parts, and it is to be noted that the tongues 31 integral with the outer walls 22 of the accessories have to be bent outwardly relative to these walls in order that they will align with the inner walls 20 of the accessory to which they are to be bolted by the illustrated bolts and nuts 9, 4, 3. The coupling arrangement will be readily understood from Fig. 13 in that the tongue 31 connected to each inner wall 20 fits to the inside of the outer wall 22 of the other accessory, whilst the tongue 31 of the outer wall 22 lies to the outside of the wall 20 of the said other accessory. As can be appreciated, it is necessary that the walls 20 and 22 of the accessories have to be provided with apertures as illustrated by reference 11 to enable this coupling to take place.

Figs. 14 to 19 show what are known as riser accessories for connecting cable trays to enable cables to rise or fall from one level to another. Risers are of two types namely external risers and internal risers. Figs. 14, 16 and 18 show external risers, whilst Figs. 15, 17 and 19 show internal risers. A riser is essentially a curved tray subtending an angle, usually 90°, and is provided with a curved base with side walls thereon. If the side walls extend away from the centre of curvature of the base as in Figs. 14, 18 and 18, the cables are supported on the exterior of the base and therefore the risers are referred to as external risers, whilst if as in the case of Figs. 15, 17 and 19, the side walls extend inwardly towards the centre of curvature of the base, the risers are referred to as internal risers.

The risers shown in Figs. 14 and 15 are of conventional design, and the base 50 thereof comprises a plurality of sections which lie at an angle to each other, but the combined sections forming substantially a curved surface. The walls 50 and 52 are formed by folding extensions of said sections at right angles to the base 50. The risers shown in Figs. 14 and 15 are of the return flange type, and the walls 50 and 52 are formed by folding extensions 54 of the said base sections relative to the base. In the case of the external riser shown in Fig. 14, the gaps created by folding said extensions 54, are closed by metallic inserts 56, suitably shaped and welded in position, the inserts having the effect of rendering the return walls 50 and 52 continuous. In the case of the internal riser in Fig. 15, the utilisation of inserts is of course not necessary, as the sections 54 can be shaped so that when they are folded to the position shown in Fig. 15, the edges of the inserts butt together and are welded.

The utilisation of inserts or the welding together of the extensions 54 in the arrangement shown in Fig. 15 is difficult to perform, and a riser design according to another aspect of the invention is shown in Figs. 16 and 17 overcomes this difficulty insofar as reinforcing strips 58 and 60 are utilised in the walls 50 and 52. The walls are still essentially formed by the extensions 54, but the extension 54 are formed around the insert strips 58 and 60, and are welded thereto. In the case of the external risers shown in Fig. 16, the strips 58 and 60 bridge the gaps between the extensions 54, whereas in the arrangement shown in Fig. 10, the strips 58 and 60 form a reinforcement means, and also a means whereby the extension 54 can be readily welded to the strips 58 and 60. In each case the strips reinforce the walls 50 and 52.

The risers shown in Figs. 1 8 and 19 are essentially similar to those shown in Figs. 16 and 17 except that the reinforcing strips 58 and 60 are provided with extensions or overhangs 62, 64 forming tongues similar to tongues 30 of previous embodiments of the invention so that these overhangs extend beyond the ends of the base 50 at each end of the base. These overhangs 62 and 64 form connection pieces which are of course integral with the riser, and can lie between the wall portions of return flange cable trays when coupled thereto. Slots in the overhang portions 62, 64 enable these portions to be bolted or screwed to the cable trays as described herein.

Fish plate extensions can be formed integral with or welded to the ends of the base 50 so as to provide support and connecting plates to the base section 50, for the purpose as described herein. The fish plate sections may be welded to the undersides of the bases 50. Figs. 18 and 19 illustrate an aperture pattern provided in the base sections 50, and Fig. 18 also illustrates the end of a cable tray positioned for connection to the adjacent end of the riser.

The utilisation of a reinforcing strip in risers as described in relation to Figs. 16 to 19 constitutes an aspect of this invention, whether or not the overhangs or tongues 62, 64 are provided as the use of the strips leads to significant manufacturing simplication.

Fig. 20 illustrates how a U-sectioned coupling cable tray section 66 of the return flange type can, by the use of bolts and nuts 9, 3, 4 as described herein, be used to couple the ends of two risers to provide an accessory assembly for providing an S-bend in a vertical plane.

Figs. 21 to 24 show risers, which are external risers, but enabling the deflecting of the cables and pipes in a vertical plane through angles from 90° to 22.5° respectively in equal 22.5° steps. The riser of Fig. 21 corresponds to the riser of Fig. 18, and the subtended angle of the riser S is 90°. The subtended angle S of the riser of Fig. 22 is 77.5°, the subtended angle of riser 23 is 45°, and the subtended angle S of the riser of Fig. 24 is 22.5°.

The accessories described and illustrated herein preferably are constructed from sheet metal stampings of appropriate profile and formed to shape by appropriate folding and pressing as described, but it is not necessary that sheet metal be used as other materials of equivalent characteristics can be utilised if desired. Also, it is not necessary that the accessories be formed by folding and pressing of sheet material blanks.

## Claims

1. An accessory for a cable tray system, said accessory comprising a base plate and side walls and being provided with an integral connecting piece adapting the accessory for connection to a cable tray.

2. An accessory according to Claim 1, wherein said connecting piece comprising extension tongues which are integral with said side walls and which have apertures by which the tongues may be bolted to said cable trays.

3. An accessory according to Claim 2, wherein the tongues are connected to said side walls by means of reduced width neck portions, enabling the tongues readily to be bent out of the planes of the side walls if required.

4. An accessory according to Claim 2 or 3, wherein said extension tongues are of reduced width at their free ends.

5. An accessory according to any one of Claims 2 to 4, wherein said walls are of the return type.

6. An accessory according to any preceding Claim, wherein said connecting piece comprises an extension fish plate integral with said base plate.

7. An accessory according to Claim 6, wherein said fish plate is jiggled out of the plane of the base plate so as to lie under the end of a cable tray to which the accessory is to be connected.

8. An accessory according to any one of the preceding Claims for connecting the ends of two or more cable trays, said accessory having integral tongues and/or extension plate for each cable tray to be connected thereto.

9. An accessory according to any one of the preceding Claims, wherein the side walls are formed of separate sections folded relative to the base, and strips secured for example by welding to said folded sections, and wherein when said connecting piece comprises said tongues, the tongues are integral with said strips.

l0. An accessory according to Claim 9, wherein the said side walls are double walls formed by folding said sections twice, and said strips lie between the two portions of said sections.

11. An accessory according to Claim 9 or 10, wherein said base and said strips are curved, the accessory being a riser.

12. An accessory according to any preceding claim, wherein the accessory is formed from sheet metal.

13. An accessory substantially as hereinbefore described with reference to any of the embodiments illustrated in the accompanying drawings.

FIG 1

FIG.2

FIG.3

FIG.4

FIG.5

FIG.6

FIG.7

FIG.8

FIG.9

FIG.10

FIG. 11

FIG.12

FIG.13

FIG. 16

FIG. 17

FIG. 14

FIG. 15

FIG.18

FIG.19

FIG.20

FIG.21

FIG.24

FIG.22

FIG.23